# EUROPEAN PATENT APPLICATION

(11) **EP 4 417 501 A1**
(43) Date of publication of application: **21.08.2024**
(21) Application number: 23156920.3
(22) Date of filing: 15.02.2023
(51) Int. Cl.: B62J 50/21, B62J 11/19, B62J 43/20, B62J 43/13, B62J 45/421, B62M 6/65

(54) **ELECTRIC DRIVE SYSTEM FOR ASSISTED PEDALLING CYCLE**

(71) Applicant: MAHLE International GmbH, 70376 Stuttgart (DE)
(72) Inventor: de la Serna Gonzalez, Marco Antonio, 34005 Palencia (ES); Franco Revilla, Jose Vicente, 34810 Matalbaniega (ES); Jumbert, Jaume, 25430 Juneda (ES)

(57) **Abstract**

An electric drive system (8) for an assisted pedaling bicycle (1) is provided, the system comprising:
- a battery holder (9) with an attachment portion (10) for attaching the battery holder (9) externally to a frame tube (5, 6) of a bicycle (1), the battery holder (9) comprising a battery holding portion (11),
- a battery (12) arranged to be removably received in the battery holding portion(11) of the battery holder (9),
- an electric hub motor (13) for mounting on the front or rear wheel of the bicycle (1)
- a motor controller (17) for controlling the power delivered to the hub motor (13) from the battery (12), whereby the motor controller (17) comprises attachment means (28, 36) for attachment to the bicycle frame (4) directly or indirectly via a controller holding bracket (18) attached to the bicycle frame (4),
- a first cable (22) connecting the motor controller (17) to the hub motor (13), and a second cable (23) for connecting the motor controller (17) to the battery (12),
- whereby the battery (12) comprises an integral control interface (14) for changing the assist level provided by the hub motor (13) and display means (16) for displaying information relating to the motor assist level or battery charge level.

## Description

### TECHNICAL FIELD

The invention relates to an electric drive system for an assisted pedaling bicycle according to the preamble of independent claim 1 and a bicycle incorporating such a system according to the preamble claim 9.

### BACKGROUND ART

A known prior art electric drive system for an assisted pedaling bicycle is disclosed in WO2019038463A2. This describes a motorization device for assisted pedaling bicycles comprising a rear hub motor. The motor controller and the battery manager are arranged together with the battery in the down tube of the bicycle frame. A control unit that can be operated by a user to actuate and control the motor is arranged in the top tube of the bicycle.

### SUMMARY

The electric drive system according to the invention as defined in claim 1 has the advantage that it can be used in a wide variety of existing frame designs, such that bicycle manufacturers can design bicycles as they would for a non-assist bicycle, and with few modifications the electric drive system according to the invention can be incorporated into the same bicycle broadening the applications for each bicycle or frame design.

This object is achieved according to a first aspect of the invention with an electric drive system for an assisted pedaling bicycle, the system comprising:
- a battery holder with an attachment portion for attaching the battery holder externally to a frame tube of a bicycle, the battery holder further comprising a battery holding portion,
- a battery arranged to be removably received in the battery holding portion of the battery holder,
- an electric hub motor for mounting on the front or rear wheel of the bicycle
- a motor controller for controlling the power delivered to the hub motor from the battery, whereby the motor controller comprises attachment means for attachment to the bicycle frame directly or indirectly via a controller holding bracket attached to the bicycle frame,
- a first cable connecting the motor controller to the hub motor, and a second cable for connecting the motor controller to the battery,
- whereby the battery comprises an integral control interface for changing the assist level provided by the hub motor and display means for displaying information relating to the motor assist level or battery charge level.

As the battery and the motor controller are attachable to the outside of the bicycle frame, and the battery itself is used as the user interface for controlling the level of motor assist, the system can be implemented on a wide variety of different bicycle frame sizes and types with no or minimal frame modifications. The use of an electric hub motor also doesn't require any modification of the frame, as it can be incorporated into different wheel sizes. By providing the control interface for changing the assist level on the removable battery, no separate inbuilt HMI interface is required on the bicycle.

The motor controller has advantageously an elongated shape with a longitudinal axis and first and second longitudinal ends, wherein the first and second cable extend from a first end of the motor controller facing in the longitudinal direction in the direction of the longitudinal axis. In addition, a pedaling sensor or a torque sensor can be connected via a cable to a first axial end of the motor controller. Such a shape and arrangement of the cables enables the same motor controller to be either attached to the external part of the bicycle frame, or it can alternatively be inserted into a tube part of the bicycle frame such that it is hidden from view. Therefore, bicycle manufacturers have the choice, depending on the type and size of their frame, to incorporate the system according to the invention into their bicycle with the controller either being located externally to the frame or internally within a frame tube. A bicycle frame may for example be designed with regards to using only pedal power, and if the same frame is then to incorporate a motor assist system then the frame may or may not be suitable for incorporating the controller into one of the frame tubes, in which case the motor controller according to the above solves this problem, by being arranged to be either attached to the external part of the bicycle frame or inserted into a tube part of the bicycle frame.

The battery can be generally cylindrical in form. It has a size similar to a conventional water bottle so that in can be located in the same position as a water bottle carried on a conventional bicycle.

The battery can be what is known as a range extender battery, that is a battery which can be connected to a motor and a second motor controller along with a second main battery. The battery comprises for this a battery manager which is configured to communicate with the second motor controller. The same battery can therefore be used in different drive systems either as a simple range extender battery, or alternatively as a battery with a system human-machine-interface (HMI).

The battery may also be configured to be used as a powerbank together with a docking station comprising USB-C and USB-A ports enabling the battery to be used to charge laptops or smartphone devices when not in use on a bicycle.

The integral control interface can comprise a single button, having the functions power ON/OFF and a controlling of the assist level, wherein the function is selected depending on the length of time the button is pressed. The display means can be provided in the form of a line of LED's arranged on the surface of the battery.

For the case that the controller is to be attached externally to the frame a controller holding bracket can be provided, the controller holding bracket and the attachment portion of the battery holder each comprising one or more first elongate openings or slits for attaching the controller holding bracket and the attachment portion of the battery holder to a frame tube of a bicycle via at least one screw which penetrates through one of the first elongate openings or slits in both the controller holding bracket and the attachment portion of the battery holder. The attachment means on the motor controller for attachment directly or indirectly to the bicycle frame may comprise threaded holes in the motor controller. The controller holding bracket further comprising attachment means, for example in the form of one or more second elongate openings or slots, wherein one or more screws can penetrate through the openings or slots into threaded holes in the motor controller for attaching the motor controller to the controller holding bracket. This arrangement enables an uncomplicated attachment of the motor controller, using the same fixation means in the frame which are used to attach the battery holder, whereby the battery holder uses the same fixation means in the frame as a conventional drink bottle holder.

The battery holding portion of the battery holder comprises a plurality of arms which extend from the attachment portion at least partly circumferentially around the battery to hold it in place.

The second cable can comprise a first end connected to the motor controller and a second end for connection via a plug connector to the battery, wherein the battery holder or a controller holding bracket comprises a plug connector cover which holds and substantially covers the plug connector of the second cable for protecting the plug connector from the environment when the plug connector is not connected to the battery. The plug connector for connecting the second cable to the battery can therefore be protected when not in use from water ingress, thus preventing circuit damage in the controller or the battery due to short circuiting.

The electric drive system can include a pedaling sensor for sensing a pedaling motion by way of a changing magnetic field. The pedaling sensor has a sensor body and the electric drive system advantageously comprises a sensor holder for holding the pedaling sensor, wherein the sensor holder comprises a generally ring shaped section with opposing first and second flat faces with a central opening for receiving an axle of the hub motor, and a sensor holding section protruding radially from the generally ring shaped section, the sensor holding section comprising a locating groove for receiving the sensor body, and a screw provided in the sensor holding section for fixing the sensor body in the locating groove. By providing such a sensor holder, the frame of a bicycle not designed from the outset as a motor assisted bicycle can be easily converted to support the sensor by attaching the ring shaped section of the sensor holder between the part of the bicycle frame holding the hub motor and a fixing nut for fixing the axle of the hub motor to the bicycle frame. No modification of the bicycle frame is therefore required.

In a further aspect of the invention a bicycle is provided comprising a front wheel and a rear wheel, a bicycle frame having a plurality of frame tube parts, the bicycle further incorporating an electric drive system according to the invention. The frame tube parts can include for example a down tube, a seat tube and a chain stay.

In one embodiment the motor controller can be arranged in the down tube or the seat tube. In an alternative embodiment the same motor controller can be attached to an external part of the frame directly or indirectly via a controller holding bracket.

In the case that the motor controller is attached to a frame part, in particular a tube part of the frame, indirectly via a controller holding bracket the controller holding bracket can be advantageously arranged between the attachment portion of the battery holder and the tube part of the frame. The controller holding bracket and attachment portion of the battery holder being releasably attached via at least two screws to a tube part of the frame.

The first cable connecting the motor controller to the hub motor can be arranged within the one of the chain stay tubes. This requires little modification of the bicycle frame, and in the case that the motor controller is located in the down tube, offers a system which appears without close inspection to be a conventional non electric assisted bicycle.

In the case that the motor controller is arranged inside the down tube or the seat tube, an opening may be provided in a bottom bracket of the bicycle through which the motor controller can be inserted into the down tube or the seat tube.

### BRIEF DESCRIPTION OF THE DRAWINGS

Embodiments will now be described by way of example only with reference to the accompanying drawings, in which:
Figure 1 is a sectional side view of a bicycle according to the invention,
Figure 2 shows schematically a perspective view of a motor controller together with a controller holding bracket according to one embodiment of the invention,
Figure 3 shows electric drive system in partial exploded view according to one embodiment of the invention,
Figure 4 shows electric drive system assembled on part of a bicycle according to one embodiment of the invention,
Figure 5 shows electric drive system in partial exploded view according to one embodiment of the invention,
Figure 6 shows electric drive system assembled on part of a bicycle according to one embodiment of the invention,
Figure 7 shows a perspective view of a sensor holder of an electric drive system according to one embodiment of the invention.
Figure 8 shows a perspective view of a sensor holder of an electric drive system according to one embodiment of the invention

### DETAILED DESCRIPTION

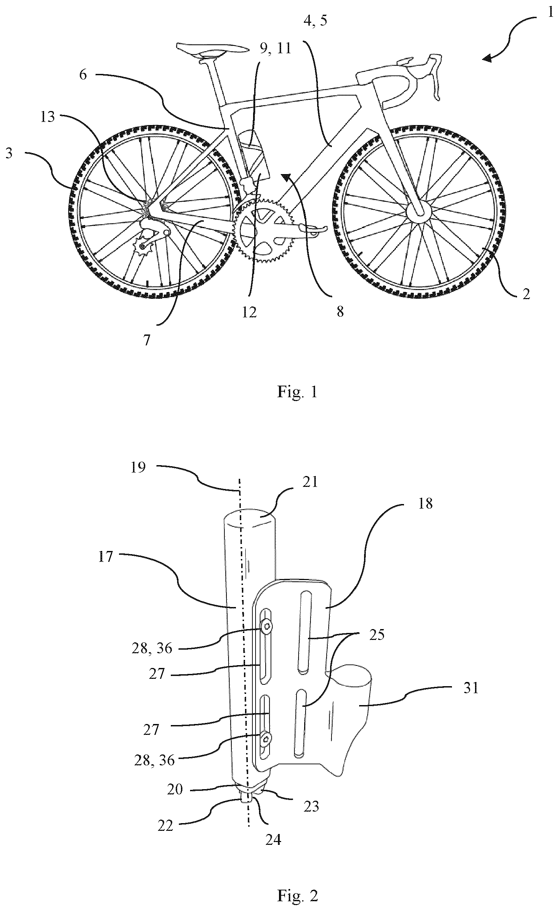

Fig.1 shows a bicycle 1 according to one aspect of the invention. The bicycle 1 is comprises a front wheel 2 and a rear wheel 3, a bicycle frame 4 having a plurality of frame tube parts, and an electric drive system 8. The frame tube parts can include for example a down tube 5, a seat tube 6 and a chain stay 7 supporting the rear wheel. The electric drive system 8 can also be incorporated into other less conventional bicycle frame configurations, for example foldable and children's bicycles.

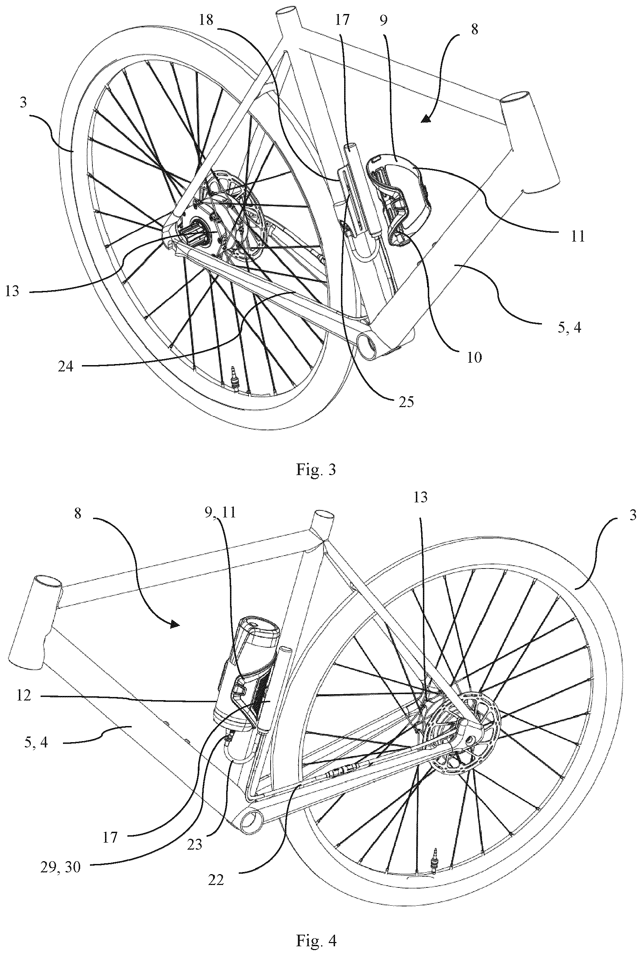

The invention will now be described in more detail with reference to figures 2 to 5. Figure 3 shows one embodiment of an electric drive system 8 according to the invention assembled on part of a bicycle, here only the frame 4 and rear wheel 3 are shown. The electric drive system 8 is used to convert a non-electric assisted bicycle into an electric assisted bicycle. The electric drive system 8 comprises an electric hub motor 13 for mounting on the front or rear wheel 3, 4 of the bicycle 1.

The electric drive system 8 further comprises a battery holder 9 with an attachment portion 10 for attaching the battery holder 9 externally to a frame tube 5, 6, 7 of a bicycle. The battery holder also has a battery holding portion 11. The battery holding portion 11 of the battery holder comprises a plurality of arms which extend from the attachment portion at least partly circumferentially around the battery to hold it in place. The battery holder 9 can be made in one piece out of metal and/or plastic, whereby the holding portion can be at least partially covered in a layer of rubber for improved grip when holding a battery 12.

A battery 12 is arranged to be removably received in the battery holding portion 11 of the battery holder. The battery 12 is generally cylindrical in form having first and second ends. The battery 12 has a size similar to a conventional water bottle so that in can be located in the same position as a water bottle carried on a conventional bicycle. The battery 12 comprises an integral control interface 14 on the first end, i.e. its upwardly facing surface. The term integral meaning that the interface is part of the battery unit which is placed in and removable from the battery holder 9. The control interface 14 enables the user to change the assist level provided by the hub motor 13. For this purpose, the integral control interface 14 can comprise a single button 15, having the functions of power ON/OFF and controlling of the assist level., wherein the function is selected depending on the length of time the button is pressed. For example, a short press of the button 15 can turn on the electric drive system 8, whilst a further short press of the button 15 can change the level of motor assist, and a long press of button 15 can turn off the electric drive system 8. Therefore, the whole electric drive system 8 can be controlled via one button 15.

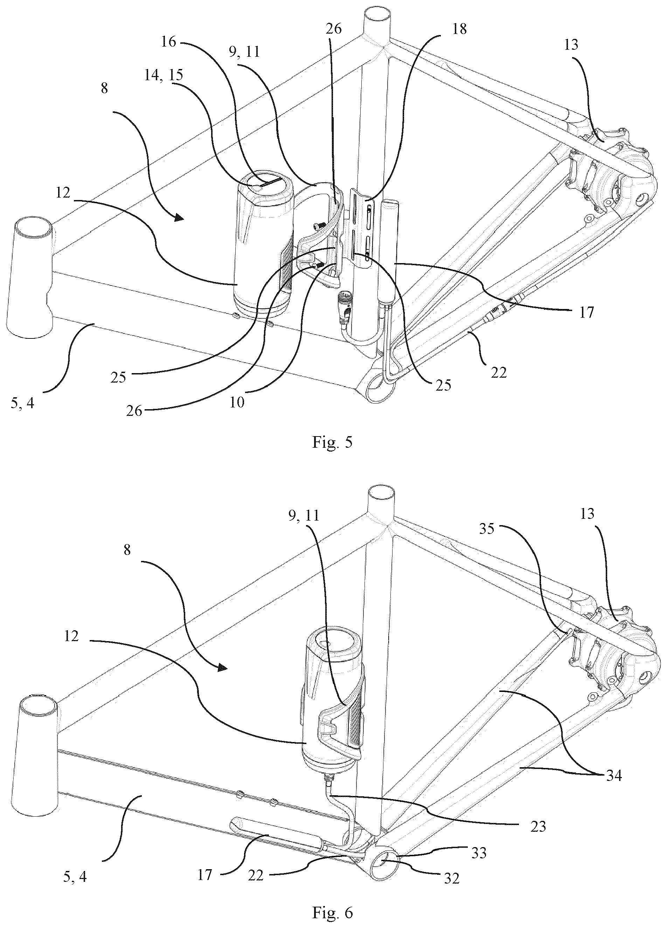

A battery 12 also includes display means 16 (see figure 5) for displaying information relating to the motor assist level or battery charge level. The display means 16 is provided in the form of a line of LED's or an led strip arranged on the first end of the battery 12, i.e. its upwardly facing surface when positioned in a battery holder 9.

The battery 12 can be what is known as a range extender battery, that is a battery which can be connected to a motor and a second motor controller along with a second main battery, in a second electrically assisted bicycle (not shown). The battery 12 comprises for this purpose a battery manager which is configured to communicate with the second motor controller. The same battery can therefore be used in different drive systems either as a simple range extender battery, or alternatively as a battery with a system human-machine-interface (HMI).

The battery 12 may also be configured to be used as a powerbank together with a docking station comprising USB-C and USB-A ports enabling the battery to be used to charge laptops or smartphone devices when not in use on a bicycle.

According to the invention the electric drive system 8 further comprises a motor controller 17 whereby the motor controller 17 is adapted for attachment to the bicycle frame 4 directly or indirectly via a controller holding bracket 18 attached to the bicycle frame. In the figure 3 the motor controller 17 is attached to the bicycle frame 4 via a controller holding bracket 18 itsel attached to the seat tube 6 of the bicycle 1. The motor controller controls the power delivered from the battery 12 to the hub motor 13.

As can be seen in figure 2 the motor controller 17 has an elongated shape with a longitudinal axis 19 a first longitudinal end 20 and second longitudinal end 21. A first cable 22 is provided connecting the motor controller 17 to the hub motor 13, and a second cable 23 is provided for connecting the motor controller 17 to the battery 12. The first and second cable 22, 23 extend from the first longitudinal end 20 of the motor controller 17 in the direction of the longitudinal axis 19. In addition, a pedaling sensor 35 can be connected via a third cable 24 to a first longitudinal end 20 of the motor controller 17. The motor controller 17 is dimensioned to be able to fit into a typical down tube 5 of a bicycle. The shape of the motor controller 17 and arrangement of the cables enables the same motor controller 17 to be either attached to the external part of the bicycle frame 4, or it can alternatively be inserted into a tube part 5, 6 of the bicycle frame 4 such that it is hidden from view. Therefore, bicycle manufacturers have the choice, depending on the type and size of their frame, to incorporate the electric drive system 8 according to the invention into their bicycle with the motor controller 17 either being located externally to the frame or internally within a frame tube 5, 6. A bicycle frame 4 may for example be designed with regards to using only pedal power, depending on the results of this design process. If the same frame 4 is then to incorporate a motor assist system then the frame 4 may or may not be suitable for incorporating the controller 17 into one of the frame tubes 5, 6, in which case the motor controller 17 according to the above solves this problem, by being adapted to be either attached to the external part of the bicycle frame 4 or inserted into a tube part 5, 6 of the bicycle frame 7.

As the battery 12 and the motor controller 17 are adapted to be attached to the external part of the bicycle frame 4, and the battery 12 itself is used as the user interface for controlling the level of motor assist, the system can be implemented on a wide variety of different bicycle frame sizes and types with no or minimal frame modifications. The use of an electric hub motor 13 also doesn't require any modification of the frame 4, as it can be incorporated into different wheel sizes. By providing the control interface 14 for changing the assist level on the removable battery 12, no separate inbuilt HMI interface is required on the bicycle 1.

For the case that the motor controller 17 is to be attached externally to the frame 4 a controller holding bracket 18 can be provided as previously mentioned. The controller holding bracket 18 and the attachment portion 10 of the battery holder 9 each comprise one or more first elongate openings 25 or slits for attaching the controller holding bracket 18 and the attachment portion 10 of the battery holder to a frame tube 5, 6 of a bicycle via at least one screw 26 which penetrates through one of the first elongate openings 25 or slits in both the controller holding bracket 18 and the attachment portion 10 of the battery holder 9. The controller holding bracket 18 is thus arranged or sandwiched between the attachment portion 10 of the battery holder and the tube part 5, 6 of the frame 4. In a preferred embodiment, the controller holding bracket 18 and attachment portion 10 of the battery holder 9 being releasably attached via at least two screws to a tube part 5, 6 of the frame 4. The controller holding bracket 18 further comprises attachment means, for example in the form of one or more second elongate openings 27 or slots, wherein one or more screws 28 can penetrate through the openings or slots into threaded holes in the motor controller 17 for attaching the motor controller 17 adjustably to the controller holding bracket 18. This arrangement enables an uncomplicated attachment of the motor controller 17, using the same fixation means in the frame which are used to attach the battery holder 9, whereby the battery holder 9 uses the same fixation means, i.e. screws, in the frame 4 as a conventional drink bottle holder. The controller holding bracket 18 can be made in one piece out of metal or plastic.

The second cable 23 comprises a first end connected to the motor controller 17 and a second end 29 for connection via a plug connector 30 to the battery 12. In the embodiment shown in figure 2, the controller holding bracket 18 comprises an integral plug connector cover 31 which holds and substantially covers the plug connector 30 of the second cable 23 for protecting the plug connector 30 from the environment when the plug connector 30 is not connected to the battery 12. The plug connector 30 for connecting the second cable to the battery 12 can therefore be protected when not in use from water ingress, thus preventing circuit damage in the controller 17 or the battery 12 due to short circuiting. Alternatively, the plug connector cover 31 can be integral with the battery holder 9.

In an alternative embodiment a motor controller 17 of the same type can be arranged in the down tube 5 or the seat tube 6. Figure 6 shows such an embodiment with the motor controller 17 arranged within the down tube 5. In the case that the motor controller 17 is arranged inside the down tube 5 or the seat tube 6, an opening 32 is provided in a bottom bracket 33 of the bicycle 1 through which the motor controller 17 can be inserted into the down tube 5 or the seat tube 6.

The first cable 22 connecting the motor controller 17 to the hub motor 13 can be arranged within the one of the chain stay tubes 34. Also, the third cable connecting the pedaling sensor 25 to the motor controller 17 can be arranged in one of the chain stay tubes 34. This requires little modification of the bicycle frame 4, and in the case that the motor controller 17 is located in the down tube 5, offers a system which appears without close inspection to be a conventional non electric assisted bicycle.

The pedaling sensor 35 can sense the pedaling speed by sensing a change in a magnetic field caused by the motion of a magnetic part attached to a part of the bicycle which rotates due to a rotation of the pedal crank. The magnet part could be part of the freewheel or attached to the freewheel of the hub motor 13. Alternatively a torque sensor arranged at the bottom bracket of the bicycle 1 can be used instead of a pedaling sensor 35.

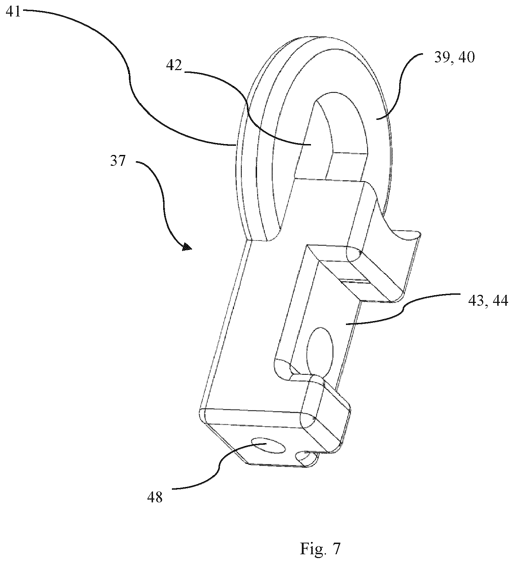

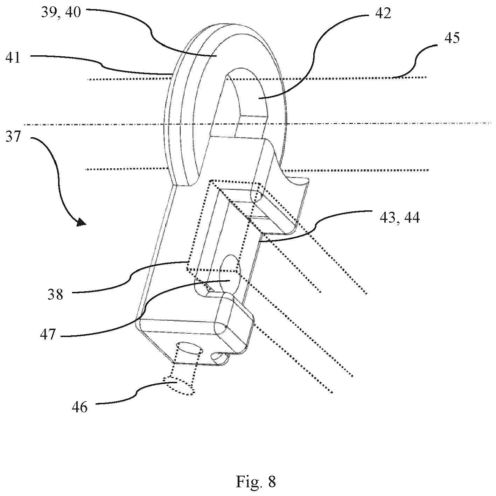

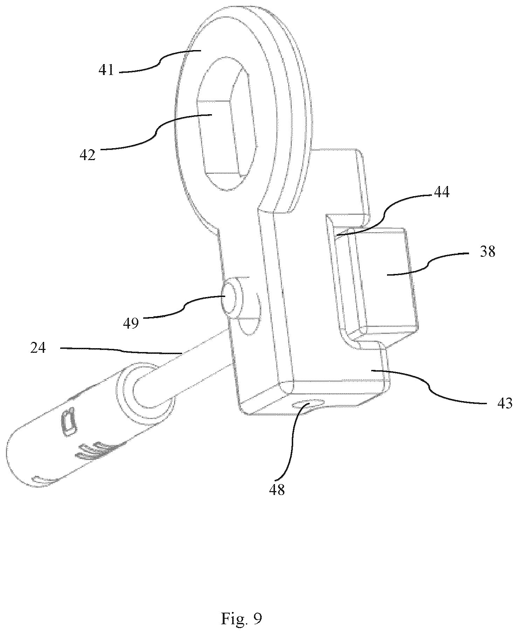

An arrangement for holding the pedaling sensor 35 is now described with reference to figures 7 to 9, whereby only the holder is shown in figure 8 with continuous lines and the other parts are indicated with dotted lines. The electric drive system can further comprise a sensor holder 37 for holding the pedaling sensor 35, wherein the sensor holder 37 comprises a generally ring shaped section 39 with opposing first and second flat faces 40, 41 and a central opening 42 for receiving an axle 45 of the hub motor 13. The generally ring shaped section 39 can therefore be placed on the axle between a part of the bicycle frame 4 supporting the axle 45 a securing nut (not shown). A sensor holding section 43 protrudes radially from the generally ring shaped section 39, the sensor holding section comprising a locating groove 44 for receiving the sensor body 38, and a screw 46 provided in a threaded hole 48 in the sensor holding section for fixing the sensor body 38 in the locating groove 44. The sensor body 38 can have a protrusion extending in the direction parallel to the axle 45 into a hole 47 in the holding section 43, whereby the screw 46 can contact the protrusion in order to fix the sensor 35 in the groove 44.

### LIST OF REFERENCE NUMERALS

- 1.: Bicycle
- 2.: Front wheel
- 3.: Rear wheel
- 4.: Bicycle frame
- 5.: Down tube
- 6.: Seat tube
- 7.: Chain stay
- 8.: Electric drive system
- 9.: Battery holder
- 10.: Attachment portion of battery holder
- 11.: Battery holding portion
- 12.: Battery
- 13.: Hub motor
- 14.: Control interface
- 15.: Button
- 16.: Display means
- 17.: Motor controller
- 18.: Controller holding bracket
- 19.: Longitudinal axis
- 20.: First longitudinal end
- 21.: Second longitudinal end
- 22.: First cable
- 23.: Second cable
- 24.: Third cable
- 25.: First elongate openings/slits
- 26.: Screw
- 27.: Second elongate openings/slits
- 28.: Screw
- 29.: Second end of second cable
- 30.: Plug connector
- 31.: Plug connector cover
- 32.: Opening
- 33.: Bottom bracket
- 34.: Chain stay tube
- 35.: Pedaling sensor
- 36.: Threaded hole
- 37.: Sensor holder
- 38.: Sensor body
- 39.: Ring shaped section
- 40.: Flat face
- 41.: Flat face
- 42.: Opening
- 43.: Sensor holding section
- 44.: Locating groove
- 45.: Axle
- 46.: Screw
- 47.: Hole
- 48.: Threaded hole
- 49.: Protrusion

## Claims

1. An electric drive system (8) for an assisted pedaling bicycle (1), the system comprising:
- a battery holder (9) with an attachment portion (10) for attaching the battery holder (9) externally to a frame tube (5, 6) of a bicycle (1), the battery holder (9) comprising a battery holding portion (11),
- a battery (12) arranged to be removably received in the battery holding portion(1 1) of the battery holder (9),
- an electric hub motor (13) for mounting on the front or rear wheel of the bicycle (1)
- a motor controller (17) for controlling the power delivered to the hub motor (13) from the battery (12), whereby the motor controller (17) comprises attachment means (28, 36) for attachment to the bicycle frame (4) directly or indirectly via a controller holding bracket (18) attached to the bicycle frame (4),
- a first cable (22) connecting the motor controller (17) to the hub motor (13), and a second cable (23) for connecting the motor controller (17) to the battery (12),
- whereby the battery (12) comprises an integral control interface (14) for changing the assist level provided by the hub motor (13) and display means (16) for displaying information relating to the motor assist level or battery charge level.

2. An electric drive system (8) according to claim 1, **characterized in that** the motor controller (17) has an elongated shape with a longitudinal axis and first and second longitudinal ends (20, 21), wherein the first and second cable (22, 23) extend from a first end (20) of the motor controller (17) facing in a longitudinal direction in the direction of the longitudinal axis (19).

3. An electric drive system (8) according to claim 2, wherein a torque sensor for sensing the torque applied on a crankshaft of a bicycle,or a pedaling sensor (35) for sensing a pedaling motion is connected via a third cable (24) to the first longitudinal end (20) of the motor controller (17).

4. An electric drive system (8) according to one of the preceding claims, wherein the electric drive system (8) comprises a pedaling sensor (35) for sensing a pedaling motion by way of a changing magnetic field, the pedaling sensor (35) having a sensor body (38) , the electric drive system (8) further comprising a sensor holder (37) for holding the pedaling sensor (35), wherein the sensor holder (37) comprises a generally ring shaped section (39) with opposing first and second flat faces (40, 41) with a central opening (42) for receiving an axle (45) of the hub motor (13), and a sensor holding section (43) protruding radially from the generally ring shaped section (39), the sensor holding section comprising a locating groove (44) for receiving the sensor body (38), and a screw (46) provided in the sensor holding section for fixing the sensor body in the locating groove (44).

5. An electric drive system (8) according to one of the preceding claims, wherein a controller holding bracket (18) is provided, the controller holding bracket (18) and the attachment portion (10) of the battery holder each comprising one or more first elongate openings (25) or slits for attaching the controller holding bracket (18) and the attachment portion (10) of the battery holder (9) to a frame tube (5, 6) of a bicycle via at least one screw (26) which penetrates through one of the first elongate openings (25) or slits in both the controller holding bracket (18) and the attachment portion (10) of the battery holder (9).

6. An electric drive system (8) according to claim 1 or claim 2, **characterized in that** the second cable (23) comprises a first end connected to the motor controller (17) and a second end (29) for connection via a plug connector (30) to the battery (12), wherein the battery holder (9) or a controller holding bracket (18) comprises a plug connector cover (31) which holds and substantially covers the plug connector (30) of the second cable (23) for protecting the plug connector (30) from the environment when the plug connector (30) is not connected to the battery (12).

7. An electric drive system (8) according to one of the preceding claims, wherein the battery (12) is configured as a range extender battery, in particular a battery which can be connected to a motor and a second motor controller along with a second main battery, and comprising a battery manager which is configured to communicate with the second motor controller.

8. An electric drive system according to one of the preceding claims, wherein the attachment means in the motor controller (17) for attachment of the motor controller (17) to the bicycle frame (4) directly or indirectly comprises threaded holes (28) for receiving screws (28).

9. Bicycle (1) comprising a front wheel (2) and a rear wheel (3), a bicycle frame (4) having a plurality of frame tube parts including a down tube (5), a seat tube (6) and a chain stay (34), the bicycle (1) further incorporating an electric drive system (8) according to one of the preceding claims.

10. Bicycle according to claim 9 wherein a controller holding bracket (18) is arranged between the attachment portion (10) of the battery holder (9) and a tube part (5, 6) of the frame (4), the controller holding bracket (18) and attachment portion (10) of the battery holder being releasably attached via at least two screws (26) to a tube part of the frame (4).

11. Bicycle according to one of the preceding claims, wherein the motor controller (17) is arranged in the down tube (5).

12. Bicycle according to one of the preceding claims, wherein the motor controller is arranged in the seat tube (6).

13. Bicycle according to one of the preceding claims, wherein the first cable 22 is arranged in within the one of the chain stay tubes (34).
